# EUROPEAN PATENT APPLICATION

(11) **EP 1 688 307 A2**
(43) Date of publication of application: **09.08.2006**
(21) Application number: 06250354.5
(22) Date of filing: 24.01.2006
(51) Int. Cl.: B60R 13/00

(54) **Road safety breakdown panel**

(30) Priority: 02.02.2005 GB 0502175
(71) Applicant: Centurion Risk Assessment Services Ltd. (UK), Andover, SP11 7PE (GB)
(72) Inventor: Rees, Paul, Andover SP11 7PE (GB)
(74) Representative: Illingworth-Law, William Illingworth

(57) **Abstract**

A road safety breakdown panel and a method of providing a breakdown hazard warning for a vehicle are disclosed. The road safety breakdown panel comprises a flexible sheet of high visibility material, the sheet displaying,a hazard warning symbol, and being provided at or adjacent each corner thereof with attachment means for attaching the panel to the outside rear of the vehicle.

## Description

This invention relates to a road safety breakdown panel to aid motorists in event of a vehicle breakdown.

At present, the advice to motorists in the event of a breakdown is to put on their hazard warning lights, and place a warning hazard triangle on the ground some distance back along the road. It is also recommended that all occupants exit the vehicle and wait in a safe place such as a roadside bank.

Whilst the warning hazard triangle, when used correctly and placed at the recommended distance from the vehicle, assists oncoming vehicles in recognising the hazard of a breakdown, it has often been reported that oncoming vehicles do not see the warning hazard triangle since their view is obstructed either by following a large vehicle or by inclement weather such as rain or snow reducing visibility.

Furthermore, when the driver deploys the warning triangle by walking back towards oncoming traffic they may place themselves in danger in doing so, especially in conditions of poor visibility.

Therefore the present invention aims to provide a hazard warning which is more highly visible to oncoming vehicles.

According to the present invention there is provided a road safety breakdown panel for a vehicle, the panel comprising a flexible sheet of high visibility material, the sheet displaying a hazard warning symbol, and being provided at or adjacent each corner thereof with attachment means for attaching the panel to the outside rear of a vehicle. The dimensions of the panel are preferably such that, when deployed on the rear of a car, it extends from the top to the bottom of the rear of the car.

Such a large panel of high visibility material on the rear of the vehicle may be seen from a far greater distance than a small ground height warning triangle, giving approaching traffic a better chance of avoiding the hazard.

The attachment means may include a variable length member such as elastic cord attached at or adjacent each corner of the panel terminating in securing means for securing to the outside of the vehicle. This facilitates stretching the panel flat on vehicles of different dimensions. For example, such securing means may comprise a hook. At each side of the top of the panel, these may be secured to the top frame of the windows, or to a roof sill or roof rack on each side of the vehicle. At each side of the bottom of the panel, they may be secured to the wheel hubs or the underside of the rear of the vehicle on each side thereof.

The warning sign is for example a triangle symbol, preferably also formed of a high visibility material in a contrasting colour, and there may be a plurality of such triangle symbols along the length of the panel. For example, the panel may be made of yellow reflective material and the warning triangle symbols may be formed of orange or white reflective tape or both attached thereon.

The panel preferably has a width somewhat less than that of a car, such that the hazard warning lights of a car may still be seen when the panel is deployed thereon.

Thus a driver may carry the panel folded up in the vehicle, and in the event of a breakdown may deploy the panel on the rear of the vehicle before walking down the road to set up the usual hazard-warning triangle. This assists the safety of the driver whilst setting up the warning triangle.

Preferably, the panel is provided in a kit also including a plurality of high visibility waist jackets or vests. These may be worn by the vehicle occupants to improve their visibility and thus assist their safety either in the vehicle or having left the vehicle.

The invention will now be described with reference to the accompanying drawings in which:
Figure 1 is a view of the rear of a car with a panel according to one embodiment of the invention deployed thereon;
Figure 2 is a diagram of a larger vehicle with such a panel deployed;
Figure 3 shows the attachment from the corner of the panel to the window frame of the car of Figure 1;
Figure 4 illustrates the attachment of the panel to the underside of the car; and
Figure 5 illustrates the attachment of the panel to the wheel hub of the car.

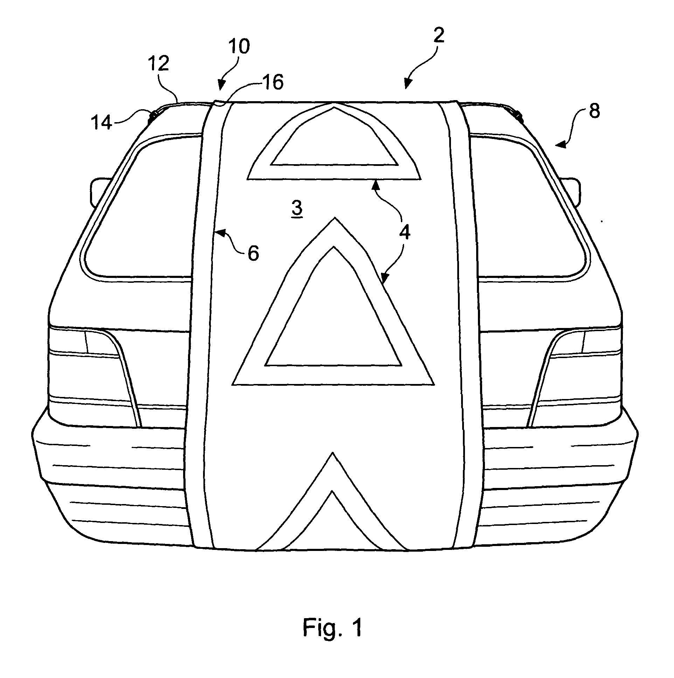

Referring to Figure 1, a breakdown safety panel 2 comprises a flexible sheet 3 which is of a high visibility material, which in this example is a yellow reflective material. The panel displays three outline hazard warning triangle symbols 4 in a contrasting reflective tape along the length thereof. The tape may for example be stitched onto the sheet. Reflective tape is also fixed around the periphery 6 of sheet 3. In this example the tape is red for the center symbol and the peripheral tape, and white for the other two symbols.

To each corner 10 of the sheet 3 is attached a variable length member comprising an elastic cord 12 terminating in a plastic coated hook 14. The elastic cord 12 may be attached to each corner 10 by passing through an aperture reinforced with a metal rivet 16.

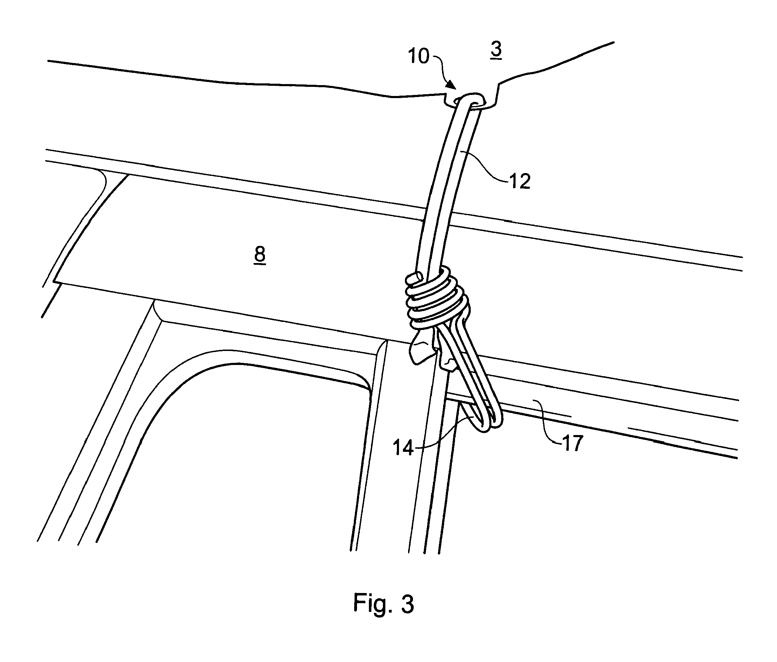

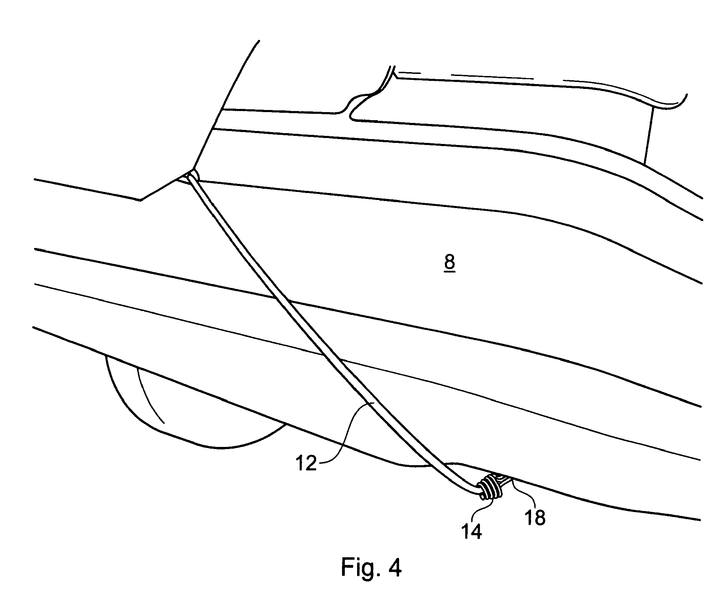

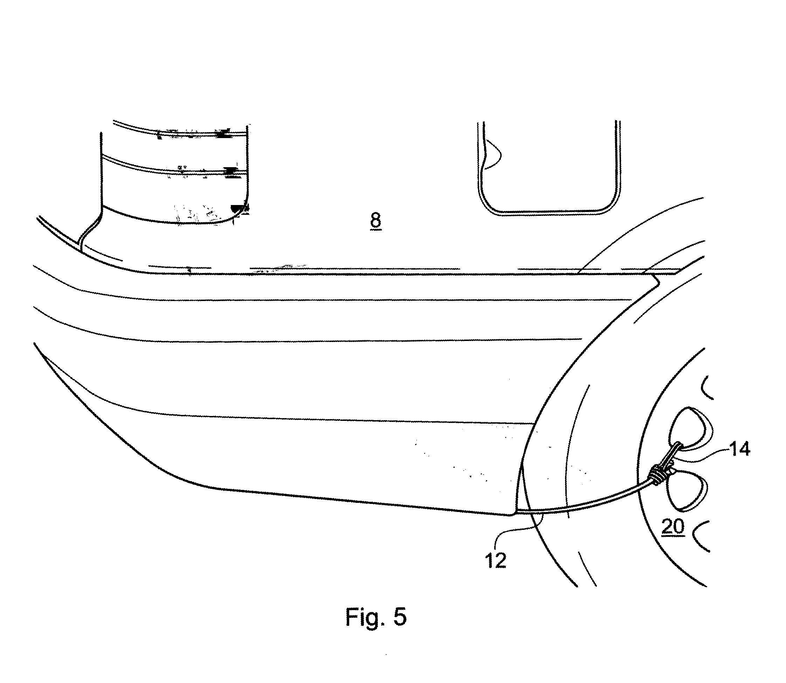

As can be seen from Figure 3, on either side of the top of the sheet 3, the hooks 14 may be attached to the upper window frame 17 of the car 8. Alternatively the hooks 14 may be attached to any secure place such as the roof sill or roof rack. Referring to Figures 4 and 5, at the bottom of the sheet 3 the hooks 14 may for example be attached to the underside 18 of the body of the vehicle (Figure 4) or to the wheel hub 20 of each rear wheel (Figure 5). In this way the panel is stretched out over the rear of the vehicle 8.

The panel is preferably sized to extend from the top to the bottom of a car, and be somewhat less wide, so as to extend between the hazard warning lights 9 without covering them. In this example the sheet 3 is approximately half of the width of the rear of the car 8. Thus, the sheet 3 may be approximately 2m in length by approximately .75m wide. The triangle symbols 4 may be about 0.6m along each side. If the vehicle is small, such as a mini or sports car, the top of the panel may be attached to the front part of the vehicle (for example the front windows or wiper housing).

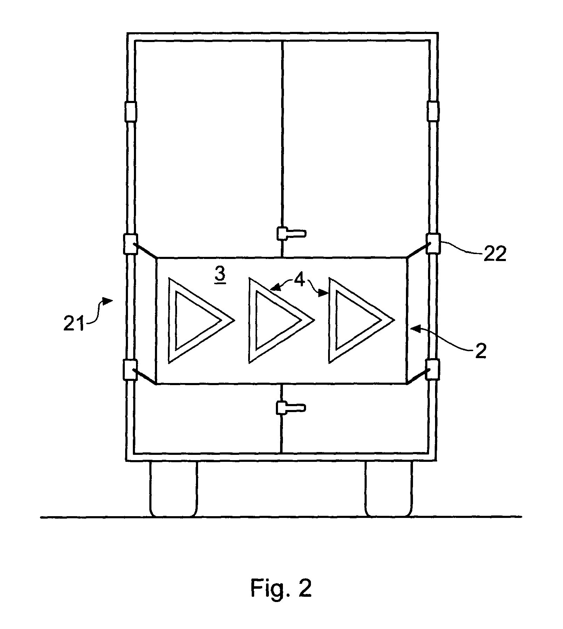

Referring to Figure 2, for a larger vehicle 21 such as an articulated lorry or high top delivery van, the panel 2 may be deployed sideways, and each corner may be attached to the side door hinges 22. The triangular symbols may then also serve as arrows to warn the oncoming driver to move to the side to avoid the hazard.

With the panel attached externally of the vehicle, the vehicle remains weatherproof. The material of the panel is preferably fast drying and lightweight and can easily be folded or rolled up and stored in the rear seat pocket or boot of the vehicle along with a standard hazard warning triangle. There may be a pocket attached to one end of the sheet into which the panel may be folded for storage. The panel may be supplied with high - visibility waist jackets for the vehicle occupants, for example either two or four such jackets.

In the event of a breakdown, the driver and any other occupants of the vehicle may exit the vehicle and put on high - visibility jackets. The driver unfolds the sheet and secures the two top hooks to an external gap adjacent the roof of the vehicle as described. It is then rolled down and secured at the bottom by the other two hooks. In poor conditions, for example at nighttime, the headlights of oncoming vehicles will reflect the breakdown safety panel possibly much earlier than the warning hazard triangle if deployed by the driver. It is anticipated that such a panel may be seen from over two kilometers away with a clear view. Thus the visibility and safety of the vehicle and occupants is improved.

## Claims

1. A road safety breakdown panel for a vehicle, the panel comprising a flexible sheet of high visibility material, the sheet displaying a hazard warning symbol, and being provided at or adjacent each corner thereof with attachment means for attaching the panel to the outside rear of the vehicle.

2. A panel as claimed in Claim 1, wherein the attachment means each comprise a member of variable length extending from a position at or adjacent the corner, to a securing means for securing to the outside of the vehicle.

3. A panel as claimed in Claim 2, wherein the member of variable length passes through an aperture at or adjacent the corner of the sheet.

4. A panel as claimed in Claim 2 or 3, wherein the member of variable length comprises elastic cord.

5. A panel as claimed in any of Claims 2 to 4, wherein the securing means comprises a hook.

6. A panel as claimed in any preceding claim, wherein the hazard warning symbol is a triangle.

7. A panel as claimed in any preceding claim, wherein the hazard warning symbol comprises high visibility material of a contrasting colour.

8. A panel as claimed in any preceding claim, comprising a plurality of hazard warning symbols provided along the length of the panel.

9. A panel as claimed in any preceding claim having a length arranged to substantially cover the rear of a car from top to bottom, and a width arranged to fit between the rear hazard warning lights.

10. A method of providing a breakdown hazard warning for a vehicle, comprising: providing a breakdown panel as claimed in any preceding claim, and attaching the panel to the outside rear of the vehicle.

11. A kit of parts comprising a panel a claimed in any of Claims 1 to 9, and a plurality of high visibility jackets.
